Europäisches Patentamt

European Patent Office

Office européen des brevets

(11) Veröffentlichungsnummer: **0 263 271 B1**

# EUROPÄISCHE PATENTSCHRIFT

(45) Veröffentlichungstag der Patentschrift: 17.04.91

(51) Int. Cl.5: **G01N 19/08**, G01B 5/28

(21) Anmeldenummer: 87111839.4

(22) Anmeldetag: 15.08.87

(54) Vorrichtung zum Prüfen von Hohlglasbehältern.

(30) Priorität: 10.10.86 CH 4054/86

(43) Veröffentlichungstag der Anmeldung:
13.04.88 Patentblatt 88/15

(45) Bekanntmachung des Hinweises auf die
Patenterteilung:
17.04.91 Patentblatt 91/16

(84) Benannte Vertragsstaaten:
AT CH DE ES FR GB GR IT LI NL SE

(56) Entgegenhaltungen:
DE-A- 1 648 638
US-A- 3 355 811

(73) Patentinhaber: ELPATRONIC AG
Baarerstrasse 117
CH-6300 Zug(CH)

(72) Erfinder: Bogatzki, Hans-Ulrich
Ferdinand-Hodler-Strasse 24
CH-8049 Zürich(CH)

(74) Vertreter: Hotz, Klaus, Dipl.-El.-Ing. / ETH
c/o SOUDRONIC AG Industriestrasse 35
Postfach 11
CH-8962 Bergdietikon(CH)

## Beschreibung

Die Erfindung betrifft eine Vorrichtung gemäß dem Oberbegriff des Patentanspruchs 1.

Ein solche Vorrichtung ist ans der DE-A-1648638 bekannt.

Bei der Hohlglasherstellung auf automatischen Glasverarbeitungsmaschinen wird ein Speisertropfen der Glasschmelze aus dem Speiserkanal der Arbeitswanne in die Vorform eingebracht und darin mittels eines Stempels gepreßt, woraufhin das sogenannte Külbel durch Kippung um 180° in die Fertigform übergeben, fertiggeblasen und ausgeworfen wird. Wenn das Glas bei dem Preßvorgang nicht die optimale Temperatur hat oder wenn der Stempel schlecht geschmiert ist, kann der Stempel beim Herausfahren aus dem Külbel einen Faden ziehen, und zwar von der Innenoberfläche der Külbelwand oder des Külbelbodens aus. An der "Klebstelle" an dem Stempel reißt dieser Faden ab und verbleibt in Innern des Külbels. Beim Fertigblasen wird ein vom Boden ausgehender Faden nach unten geblasen und kann dabei seine Form behalten ten, wodurch im fertigen Hohlglasbehälter ein Bodenzapfen ("spike") zurückbleibt. Der Faden kann sich aber auch schon in der Vorform seitlich an die Külbelinnenwand anlegen. Ein von dieser Innenwand ausgehender Faden wird sich ebenfalls an die Innenwand anlegen. Beim Fertigblasen entsteht dann eine sogenannte Affenschaukel ("bird swing"). Solche Affenschaukeln treten üblicherweise im unteren Drittel des Hohlglasbehälters auf. Solche Bodenzapfen und Affenschaukeln treten häufiger bei Weithalsbehältern als beispielsweise bei Flaschen mit enger Mündung auf. Defekte dieser Art treten zwar bei Hohlglasbehältern größenordnungsmäßig auf 100 000 Hohlglasbehälter nur einmal auf, sind also keine sehr häufigen Defekte, Hohlglasbehälter mit solchen Defekten müssen aber unter allen Umständen ausgeschieden werden, wenn sie zum Befüllen mit Lebensmitteln bestimmt sind. Beim Befüllen solcher Hohlglasbehälter mit nichtliquidem Füllgut (Joghurt, Babynahrung, Kaffeepulver, usw.) brechen nämlich Bodenzapfen und Affenschaukeln häufig ab und bleiben im Füllgut zurück. Ebenso können sie abbrechen, wenn das Füllgut vor dem Verzehr mit einem Löffel od.dgl. umgerührt wird, was ganz besonders für Weithalsbehälter zutrifft.

Wenn bei der Hohlglasbehälterherstellung in der Glashütte ein Defekt der genannten Art, d.h. ein Bodenzapfen oder eine Affenschaukel festgestellt wird, werden beispielsweise fünf Paletten fertiger Hohlglasbehälter vorher und hinterher gesperrt und sämtliche Hohlglasbehälter handverlesen, da stets davon ausgegangen werden kann, daß solche Defekte nicht isoliert auftreten, sondern sich häufen, wenn sie schon auftreten. Zur Erzielung möglichst hoher Produktionsgeschwindigkeiten wird nämlich in der Glashütte mit möglichst heißem Glas gearbeitet, wobei es aber dann auch leichter zu solche Defekte verursachenden "Stempelklebern" kommt, weil durch heißeres Glas die Stempelschmierung häufiger beeinträchtigt wird. Außer der oben erwähnten Gefahr beim Verzehr führen solche Defekte also zu dem weiteren Nachteil, daß sie die Produktionsgeschwindigkeit in der Glashütte erheblich beeinträchtigen können.

Im Stand der Technik gibt es bereits Vorrichtungen zum Prüfen von Hohlglasbehältern auf solche Defekte, die mit optischer Prüfung arbeiten. Eine solche optische Prüfvorrichtung, die aus der DE-A-2635519 bekannt ist dient zum Feststellen des Vorhandenseins von Defekten an der Innen-Bodenoberfläche von Hohlglasbehältern, insbesondere in Form von Rissen, Glasfremdkörpern, geschmolzenem bzw. gesinterten Glas oder von ähnlichen Unzulänglichkeiten. Zu diesem Zweck ist eine Vielzahl von Lichtquellen so angeordnet, daß sie die Innenoberfläche des Bodens des Glasbehälters gleichförmig belichten, und zwar durch die Seitenwand des Behälters hindurch. In Abwesenheit von Glasfremdkörpern od.dgl. wird im wesentlichen das gesamte Licht durch die Innenoberfläche des Bodens reflektiert. Wenn Glasfremdkörper vorhanden sind, dann wird das auf diese auftreffende Licht reflektiert und durch die Bodenoberfläche hindurch zu einem Lichtfühlerelement geleitet, das dann eine Schalt- oder Ausschußeinrichtung betätigt, damit der betreffende Glasbehälter als Ausschuß ausgeworfen wir.

Nachteilig ist bei dieser optischen Prüfvorrichtung, daß sich allenfalls Bodenzapfen beträchtlicher Größe feststellen lassen und daß sich an der Innenwand des Glasbehälters, also nicht am Boden befindliche Affenschaukeln oder andere feine Glasfäden überhaupt nicht feststellen lassen dürften. Die Behälterwand weist nämlich üblicherweise Formennahtmarkierungen auf, die bei optischer Abtastung starke Signale ergeben. Weiter trägt der Behälterboden außen üblicherweise Vorformbodennarben, die ebenfalls starke Signale ergeben. Ein an entsprechender Stelle befindlicher dünner Bodenzapfen wird ein wesentlich schwächeres Signal als die Vorformbodennarben ergeben. Ferner ergeben an der Außenseite des Bodens befindliche bananenförmige Markierungen ("knurling") sehr starke Signale. Auch Schriftbilder an der Behälterwand in Bodennähe ergeben starke Signale, die die eines Bodenzapfens oder einer Affenschaukel überdecken. Es ist daher sehr schwierig, mit einer solchen optischen Prüfvorrichtung zwischen normalen, d.h. nicht zu beanstandenden optischen Defekten und wirklichen Defekten zu unterscheiden. Die Folge ist, daß die Empfindlichkeit der optischen Prüfvorrichtung so eingestellt werden muß, daß auch viele Hohlglasbehälter, die eigentlich verwendbar sind, ausgeschieden werden. Ein Faden, der eng an der Wand anliegt, ist optisch schwierig feststellbar. Feststellbar ist der Faden an der Stelle, wo er aus dem Glas austritt, weil er dort dicker ist. Das ergibt ein Signal, ein ähnliches Signal ergeben aber auch Formennahtmarkierungen, Luftbläschen im Glas und dgl. Wenn die Empfindlichkeit der optischen Prüfung so eingestellt wird, daß sie die Formennahtmarkierung nicht erfaßt, dann wird auch eine Affenschaukel nicht erfaßt.

Eine weitere bekannte Vorrichtung zum Prüfen von Glasbehältern (DE-B- 24 37 759) arbeitet zwar mit einem mechanischen Fühlerelement, das bei seiner Durchbiegung über einen elektrischen Kontakt einen Anzeigestromkreis schließt, mit dieser Vorrichtung lassen sich jedoch nur Defekte im Rand, d.h. in der Dichtungsfläche des Behälters feststellen, und zwar in Form von Luftblasen, die sich in der Randoberfläche des Behälters geöffnet haben.

Ferner sind Vorrichtungen zum selbsttätigen Prüfen von Hohlglasbehältern bekannt (DE-C- 23 08 910 und DE-B-25 45 678), die aber ebenfalls mit optischen Systemen arbeiten, welche durch die Mündung des Hohlglasbehälters hindurch den Boden belichten und daher ähnliche Nachteile wie die erstgenannte bekannte optische Prüfvorrichtung aufweisen. Außerdem gibt es auch bereits mit Hochfrequenz oder kapazitiv arbeitende Prüfvorrichtungen (DE-C- 26 48 076 bzw. 24 10 110), mit denen sich zwar Flüssigkeitsreste in Hohlglasbehältern, nicht aber Defekte der hier in Rede stehenden Art wie Bodenzapfen oder Affenschaukeln feststellen lassen. Mit Ausnahme der erstgenannten bekannten optischen Prüfvorrichtung sind alle weiter genannten bekannten Prüfvorrichtungen auch hauptsächlich zum Prüfen von Hohlglasbehältern bei deren Wiederverwendung bestimmt, nicht aber zum Prüfen von Hohlglasbehältern bei deren Herstellung in der Glashütte.

Bei der aus der DE-A- 1 648 638 bekannten Vorrichtung gemäß dem Oberbegriff des Patentanspruchs 1 ist eine Schalteinrichtung mittig an einem Kopfstück und dem Boden einer Hülse vorgesehen. Wenn in dem Hohlglasbehälter ein Vorsprung oder ein Zacken vorhanden ist, treffen Kontaktstücke der Schalteinrichtung auf ein elektrisch leitfähiges Kontaktteil derselben auf, wodurch ein Schaltkreis geschlossen wird, der ein Aussonderungssignal erzeugt. Mit dieser bekannten Vorrichtung läßt sich daher nur eine Ja/Nein-Aussage treffen, ob ein Defekt vorhanden ist oder nicht. Weitere Defekte lassen sich nicht feststellen, wenn der Schaltkreis erst einmal geschlossen worden ist, und insbesondere läßt sich auch nicht zwischen verschiedenen Arten von Defekten unterscheiden. So kann beispielsweise nicht festgestellt werden, ob das Schließen des Schaltkreises durch eine Affenschaukel an der Innenwand des Behälters oder durch einen Bodenzapfen verursacht worden ist. Es wäre aber vorteilhaft, diese beiden Defektarten auseinanderhalten zu können, weil sich dadurch Rückschlüsse auf die Art des Fehlers treffen lassen, der beim Formvorgang zur Verursachung des bei der Prüfung festgestellten Defekts geführt hat.

Diesen Vorteil kann auch eine aus der US-A-33 55 811 bekannte Vorrichtung nicht bieten. Bei dieser bekannten Vorrichtung trägt ein vertikal in den zu prüfenden Hohlglasbehälter beweglicher Stempel an seinem unteren Ende einen beweglichen Teller, wobei die Verbindung zwischen denselben aus einem Gummistopfen oder einem Kugelgelenk bestehen kann. In dem Teller sind Bohrungen vorgesehen, in welchen jeweils ein verschiebbarer Fühler angeordnet ist. Diese Fühler sind Taststifte, die über die Unterseite des Tellers vorstehen. Wenn der Teller mit dem Boden des zu prüfenden Hohlglasbehälters in vollflächigen Kontakt gebracht wird, werden die Fühler in den Teller geschoben und ein Signal erzeugt, welches zeigt, daß der Behälter normal und brauch bar ist. Wenn aufgrund des Vorhandenseins von Defekten in dem Behälter der Teller nicht in vollflächigen Kontakt mit dessen Boden gelangt, werden die Fühler nicht vollständig eingeschoben, so daß ein anderes Signal erzeugt wird, welches zeigt, daß der Behälter defekt ist. Auch mit dieser bekannten Vorrichtung läßt sich daher bezüglich der Defekte lediglich eine Ja/Nein-Aussage treffen, nicht aber zwischen verschiedenen Defekten unterscheiden.

Aufgabe dar Erfindung ist es, eine Vorrichtung der im Oberbegriff des Patentansruchs 1 angegebenen Art so auszubilden, daß sich Defekte, insbesondere in Form von Bodenzapfen oder Affenschaukeln, sicherer feststellen lassen, ohne daß verwendbare Hohlglasbehälteraufgrund der Prüfung ausgeschieden werden, und sich insbesondere feststellen läßt, ob es sich bei dem Defekt um eine Affenschaukel an der Innenwand des Behälters oder um einen Bodenzapfen handelt.

Diese Aufgabe wird erfindungsgemäß durch die im kennzeichnenden Teil des Patentanspruchs 1 angegebenen Merkmale in Verbindung mit dessen Oberbegriffsmerkmalen gelöst.

Mittels der Vorrichtung nach der Erfindung lassen sich Affenschaukeln und Bodenzapfen voneinander unterscheiden. Wenn der beweglich aufgehängte Teller bei dem Einführen des Fühlerelements in den zu prüfenden Hohlglasbehälter mit einer Affenschaukel (an der Behälterinnenwand) in Berührung kommt, wird wenigstens einer der Näherungsschalter betätigt. Dadurch läßt sich sogar feststellen, wo der Defekt aufgetreten ist. Die Affenschaukel bricht bei diesem Vorgang ab, und das Fühlerelement setzt seine Abwärtsbewegung fort. Dabei kehrt der beweglich aufgehängte Teller in seine ursprüngliche Lage zurück. Wenn er auf einen Bodenzapfen trifft, wird wieder wenigstens ein Näherungsschalter betätigt, wobei sich nunmehr erkennen läßt, daß es sich um einen Bodenzapfen handelt. Würde beispielsweise der Defekt in einem zu dicken Boden bestehen, so ließe sich auch dieser Defekt von den anderen beiden unterscheiden, denn dann würden beispielsweise alle Näherungsschalter gemeinsam betätigt.

Diese Unterscheidungsmöglichkeit bietet die Vorrichtung nach der DE-A- 1 648 638 nicht, weil dort die Hülse bei dem ersten Kontakt mit einem Defekt verschoben wird und dann diese Lage beibehält, bis sie schließlich durch Bewegung an ein Anschlagpolster wieder nach unten bewegt wird. Die Vorrichtung nach der US-A- 33 55 811 könnte vor dem Erreichen des Bodens überhaupt nur ansprechen, wenn einer der über die Unterseite des Tellers vorstehenden Fühler zufällig mit einem Hindernis in Berührung käme. Erst wenn der Teller auf dem Boden des zu prüfenden Hohlglasbehälters aufsitzt, kann festgestellt werden, ob alle oder nicht alle Fühler mit dem Boden in Berührung gekommen sind.

Die Vorrichtung nach der Erfindung bietet den weiteren Vorteil, daß die Hülse und der gelenkig daran befestigte Teller einen auswechselbaren Satz bilden, der je nach dem Innendurchmesser der Mündung des zu prüfenden Hohlglasbehälters gewählt wird. Das ermöglicht, die Vorrichtung mühelos an unterschiedliche Mündungsweiten von Hohlglasbehältern anpassen zu können, in dem einfach ein entsprechender Auswechselsatz gewählt wird.

Die Vorrichtung ist zwar ohne weiteres auch am Abfüllort einsetzbar, jedoch wird dort üblicherweise mit einer Füllgeschwindigkeit gearbeitet, die die Prüfgeschwindigkeit der Vorrichtung nach der Erfindung (300-400 Hohlglasbehälter/Stunde) um ein Mehrfaches übersteigt. Die Vorrichtung nach der Erfindung ist nicht nur in der Lage, Defekte sicher zu erkennen und diese zusätzlich auf zu beseitigen und Fehlergebnisse bei der Prüfung zu verhindern, sondern sie hat auch einen robusten Aufbau und ist einfach zu warten. Das Druckstück kann irgendein robustes Teil sein, das in der Lage ist, ein Hindernis, insbesondere Bodenzapfen oder Affenschaukeln, zu zerbrechen und bei dieser Berührung mit dem Hindernis die Schalteinrichtung zu betätigen. Die Signalgabe des Druckstückes für die Schalteinrichtung kann dabei rein mechanisch erfolgen oder aber auch piezoelektrisch, wenn das Druckstück aus piezoelektrischem Material besteht, das bei Druckeinwirkung ein elektrisches Signal zur Betätigung der Schalteinrichtung erzeugt. Als Näherungsschalter kann ganz allgemein jeder Näherungssensor eingesetzt werden, der beispielshalber induktiv, kapazitiv oder mittels einer Lichtschranke betätigbar ist, wobei im letztgenannten Fall die Lichtschranke durch den Teller unterbrochen würde. Der durch die Hülse und den gelenkig daran befestigten Teller gebildete auswechselbaren Satz, der je nach dem Innendurchmesser der Mündung des zu prüfenden Hohlglasbehälters gewählt wird, ist beispielshalber mittels einer federvorgespannten Kugel an dem Halter, die in eine entsprechende Öffnung der Hülse einfaßt, leicht an dem Halter arretierbar. Bei jedem Auswechselsatz ist die Hülse gleich, sie trägt nur einen Teller mit anderem Durchmesser. Hohlglasbehälter mit Twist-off-Verschluß gibt es nur in wenigen Größen in einer Standardreihe, so daß sich mit wenigen Auswechselsätzen beispielsweise der gesamte Größenbereich von Weithalsbehältern abdecken läßt.

Vorteilhafte Ausgestaltungen der Erfindung bilden den Gegenstand der Unteransprüche.

In der Ausgestaltung der Erfindung nach Anspruch 2 hat die von der Stange abgewandte Seite des Tellers, wenn dieser sich in der vorbestimmten Bodennähe befindet, an allen Stellen etwa den gleichen Abstand von der Bodeninnenseite. Der vorbestimmte Abstand kann beispielsweise etwa 2 mm betragen. Alle Defekte, beispielsweise in Form von Bodenzapfen, die innerhalb dieses Toleranzbereiches von 2 mm liegen, sind vernachlässigbar. Hohlglasbehälter, deren Boden um wenigstens 2 mm dicker als normal ist, würden selbstverständlich ausgeschieden. Das ist nicht als nachteilig anzusehen, weil ein von der üblichen Dicke abweichender Boden auf einen Fehler in der Glasverarbeitungsmaschine hindeutet.

In der Ausgestaltung der Erfindung nach Anspruch 3 hat das Gelenk einen besonders einfachen Aufbau.

In der Ausgestaltung der Erfindung nach Anspruch 4 ermöglicht die Vorrichtung das Unterscheiden zwischen Körperdefekten, die oberhalb des Behälterbodens bereits festgestellt werden, und Bodendefekten, die am Boden selbst festgestellt werden. Es ist vorteilhaft, diese beiden Defektarten auseinanderhalten zu können, weil sich dadurch Rückschlüsse auf die Art des Fehlers treffen lassen, der beim Formvorgang zur Verursachung des bei der Prüfung festgestellten Defekts geführt hat. Wenn die Schalteinrichtung durch den Teller betätigt wird, wird das zunächst in der Auswertelogik registriert, die dann die Auswurfeinrichtung und die Signalanzeigeeinrichtung betätigt. Die Auswertelogik registriert auch, in welchem Bereich der Defekt aufgetreten ist, um festzustellen, ob die Betätigung der Schalteinrichtung durch eine Affenshaukel an der Innenwand des Hohlglasbehälters oder durch einen Bodenzapfen desselben verursacht worden ist, um weiter festzustellen, wie häufig Fehler auftreten, usw. Wenn beispielsweise Affenschaukeln auftreten, können diese nach ihrer Häufigkeit elektronisch ausgewertet werden. Damit kann ermittelt werden, durch welche Form die Affenschaukeln erzeugt worden sind. Ein Formennummernleser kann dann so angesteuert werden, daß anschließend alle Hohlglasbehälter ausgeworfen werden, die aus der betreffenden Form stammen.

Ein besonderer Vorteil der Vorrichtung nach der Erfindung in jeder Ausgestaltung derselben ist schließlich darin zu sehen, daß mit ihr eine Vorrichtung zum Spannungstesten von hängend angeordneten Glasbehältern, die den Gegenstand des deutschen Patents Nr. 36 20 637 derselben Anmelderin bildet, auf einfache Weise vom Spannungstesten auf Prüfen von Glasbehältern umgerüstet werden kann. Es ist nämlich lediglich der Stößel der Spannungstestvorrichtung durch die Stange mit dem daran angebrachten Fühlerelement zu ersetzen und die Vorrichtung so einzustellen, daß das Fühlerelement nicht auf den Behälterboden aufgesetzt sondern nur in Bodennähe bewegt wird. Die durch die Erfindung verursachten Investitionskosten können daher niedrig gehalten werden. Außerdem können mit der gleichen Vorrichtung durch einfaches Umrüsten wahlweise Hohlglasbehälter entweder einem Spannungstest unterzogen oder auf Defekte geprüft werden.

Ein Ausführungsbeispiel der Erfindung wird im folgenden unter Bezugnahme auf die Zeichnungen näher beschrieben. Es zeigt

Fig. 1    das Prüfkarussel einer Maschine mit mehreren Vorrichtungen nach der Erfindung,

Fig. 2    das Fühlerelement der Vorrichtung nach der Erfindung in mehreren Phasen während des Prüfens eines Hohlglasbehälters,

Fig. 3    eine Teillängsschnittansicht des Fühlerelements der Vorrichtung nach der Erfindung,

Fig. 4    das Fühlerelement nach Fig. 3 in auseinandergezogener Darstellung und

Fig. 5    ein sehr vereinfachtes Blockschaltbild der Vorrichtung nach der Erfindung.

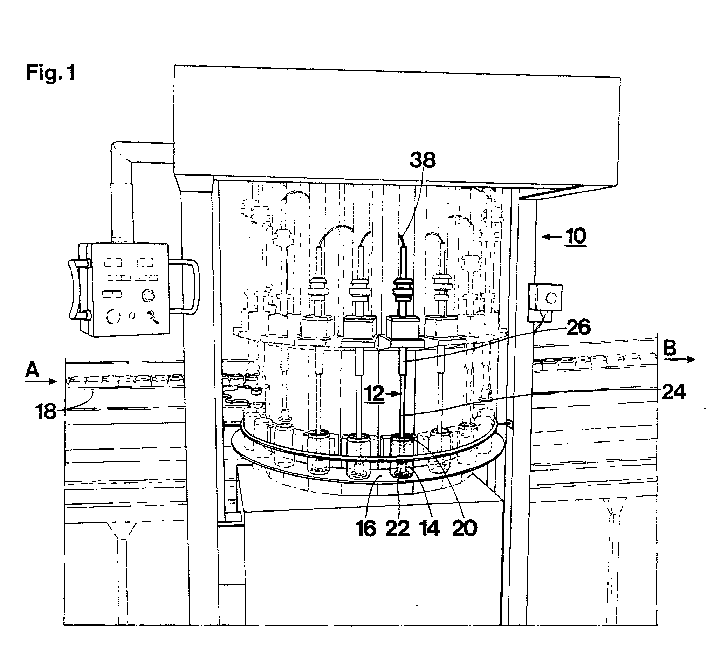

Fig. 1 zeigt ein Prüfkarussell 10 einer Maschine zum Prüfen von Hohlglasbehältern, das mit mehreren Prüfvorrichtungen 12 versehen ist. Abgesehen von den Prüfvorrichtungen 12 kann das Prüfkarussell 10 im wesentlichen den gleichen Aufbau wie das Prüfkarussell der Spannungstestvorrichtung dem o.g. deutschen Patent No. 36 20 637 haben. Unterschiedlich ist lediglich, daß dort Stößel jeweils auf den Behälterboden aufgesetzt werden, wogegen hier Prüfvorrichtungen 12 benutzt werden, deren Fühlerelement lediglich in Bodennähe gebracht wird, und daß die Hohlglasbehälter 14 bei der Prüfung nicht hängend angeordnet sind, sondern jeweils auf einem Drehtisch 16 stehen. Die Hohlglasbehälter 14 werden durch einen Förderer 18 in Richtung des Pfeils A zu dem Prüfkarussell 10 gefördert, in das sie in Fig. 1 links einlaufen. In Fig. 1 rechts verlassen die Hohlglasbehälter 14 das Prüfkarussell 10 und werden durch den Förderer 18 in Richtung des Pfeils B weitergefördert. An das Prüfkarussell 10 könnte sich noch eine nicht dargestellte Wendeeinrichtung anschließen, die jeden Hohlglasbehälter 14 mit seiner Mündung 20 nach unten dreht, damit eventuell vorhandene Fremdkörper aus dem Hohlglasbehälter herausfallen können. Zusätzlich können die Hohlglasbehälter dabei noch ausgeblasen werden.

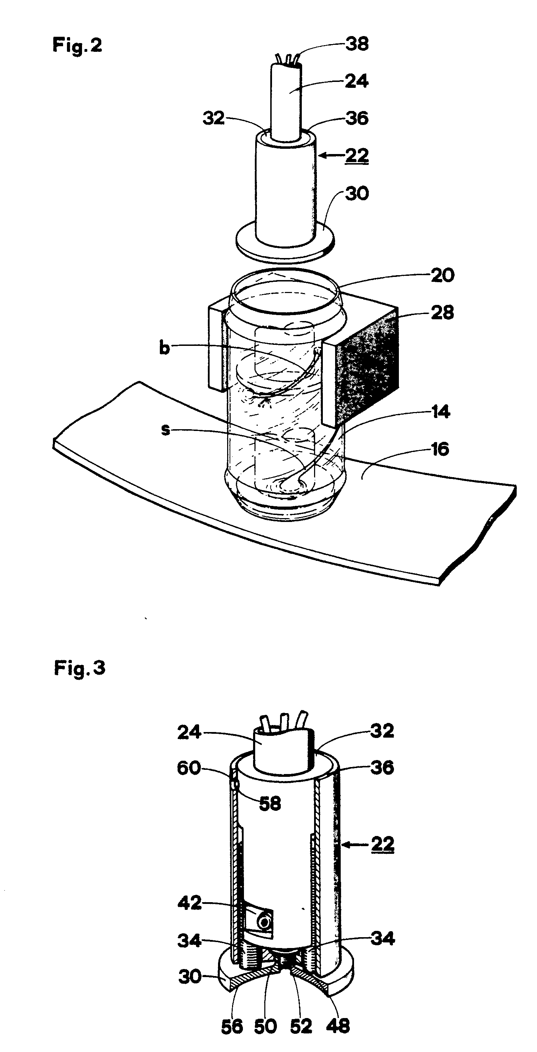

Gemäß der Darstellung in den Fig. 1 und 2 weist jede Prüfvorrichtung 12 ein Fühlerelement 22 auf, das an einer vertikal hin- und herbewegbaren Stange 24 befestigt ist. Die Stange 24 ist in einem Rohr 26 geführt. Jede Prüfvorrichtung 12 ist zentral oberhalb einer Aufnahmeeinrichtung 28 angeordnet, die jeweils einen Hohlglasbehälter 14 von dem Förderer 18 empfängt. Benachbart zu der Kreisbahn der Aufnahmeeinrichtungen 28 ist eine in Fig. 1 nicht sichtbare Kurvenbahn angeordnet, auf der ebenfalls nicht dargestellte Wagen laufen, an denen jeweils eine der Stangen 24 einstellbar befestigt ist. In Fig. 1 ist zu erkennen, daß sich in dem im Gegenuhrzeigersinn drehenden Prüfkarussell die Stangen 24 in ihren Rohren 26 entsprechend dem Verlauf der nicht sichtbaren Kurvenbahn von oben links bis zur Mitte hin abwärts und dann nach rechts oben hin wieder aufwärts bewegen. Jede Stange 24 wird an ihrem Wagen so befestigt, daß sich ein unten am Fühlerelement 22 vorgesehenes Druckstück 30 am Ende der Abwärtsbewegung der Stange ca. 2 mm oberhalb des Bodens des Hohlglasbehälters befindet, sofern nicht auf dem Boden ein Hindernis mit einer 2 mm Überschreitenden Höhe vorhanden ist. Wenn sich die Stangen in Fig. 1 von links nach rechts zunehmend nach unten bewegen, werden die Stangen 24 mit den Fühlerelementen 22 in die Mündungen 20 eingeführt und so weit nach unten bewegt, bis der genannte Abstand von 2 mm erreicht ist. Anschließend bewegen sich die Stangen wieder nach oben und ziehen dabei die Fühlerelemente aus den Hohlglasbehältern 14 heraus. Wenn bis zu der genannten Annäherung an den Behälterboden das Druckstück 30 mit keinem Hindernis in Berührung gekommen ist, gilt der geprüfte Hohlglasbehälter als gut, andernfalls wird er als Ausschuß ausgeworfen, was im folgenden noch näher beschrieben ist.

Fig. 2 zeigt als ein Beispiel eines zu prüfenden Hohlglasbehälters 14 einen Weithalsbehälter. Das Druckstück 30 des Fühlerelements 22 ist in dem hier beschriebenen Ausführungsbeispiel ein leicht beweglicher Teller. Der Durchmesser des Tellers 30 ist so gewählt, daß er gerade noch bequem in die Mündung 20 des Hohlglasbehälters 14 eingeführt werden kann. Gemäß der Darstellung in Fig. 2 sind in dem Hohlglasbehälter 14 zwei Defekte in Form von Glasfäden vorhanden, wobei es sich bei dem oberen Glasfaden b um eine sog. Affenschaukel handelt, d.h. um einen Glasfaden, der sich von einer Stelle der Behälterinnenwand aus durch das Behälterinnere hindurch zu einer anderen Stelle der Behälterinnenwand erstreckt, und wobei es sich bei dem unteren Glasfaden s um einen sog. Bodenzapfen handelt, d.h. um einen Glasfaden, der sich vom Behälterboden aus nach oben erstreckt. Das Fühlerelement 22 ist in drei Phasen dargestellt, und zwar erstens oberhalb der Behältermündung 20 vor dem Einführen in das Behälterinnere, zweitens in Behälterinneren bei der Berührung des Hindernisses in Form des oberen Glasfadens b und drittens in einer tiefsten Stellung in Bodennähe.

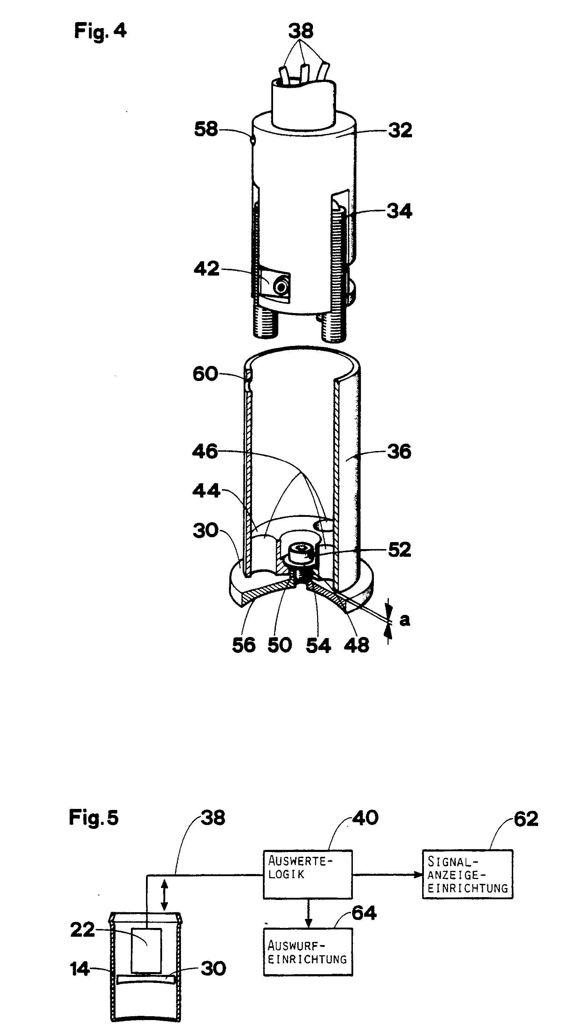

Gemäß der Darstellung in den Fig. 3 und 4 besteht das Fühlerelement 22 aus einem Halter 32, der an der Stange 24 befestigt ist und in dem drei Näherungsschalter 34 lösbar befestigt sind, und aus einer Hülse 36 mit dem Teller 30. Durch die Stange 24 sind Leitungen 38 hindurchgeführt, die die Verbindung zwischen dem Fühlerelement 22, einer nicht dargestellten Stromquelle und einer in Fig. 5 dargestellten Auswertelogik 40 herstellen. Die in dem hier beschriebenen Ausführungsbeispiel als Schalteinrichtung der Prüfvorrichtung 12 verwendeten Näherungsschalter 34 sind im Handel erhältliche Standardbauelemente. Die Näherungsschalter 34 sind symmetrisch um die Längsachse des Halters 32 angeordnet und jeweils mittels einer Klemme 42 an dem Halter einstellbar befestigt. Der Halter 32 besteht aus leichtem Material (z.B. Kunststoff Aluminium od. dgl.) und ist zylindrisch ausgebildet.

Die Hülse 36 ist ebenfalls zylindrisch ausgebildet und kann aus dem gleichen Material wie der Halter 32 bestehen. Die Hülse 36 weist eine Bodenwand 44 auf, die mit drei Bohrungen 46 für die unten aus dem Halter 32 hervorstehenden Näherungsschalter 34 und außerdem mit einer mittigen Bohrung 48 versehen ist. Der Teller 30 ist an seiner Oberseite mit einem mittigen Zapfen 50 versehen, der eine Gewindebohrung aufweist, in die eine Schraube 52 eingeschraubt ist. Zwischen dem Kopf der Schraube 52 und dem Zapfen 50 ist eine Unterlegscheibe 54 angeordnet, mit der sich der Teller um die mittige Bohrung abstützt. Der Zapfen 50 weist in der mittigen Bohrung 48 ausreichendes Spiel auf und die Höhe des Zapfens bis zur Unterseite der Unterlegscheibe 54 wird so gewählt, daß die Oberseite des Tellers einen Abstand a von ca. 0,5 mm von der Unterseite der Bodenwand 44 hat. Der Teller 30 ist auf diese Weise durch ein Gelenk, das aus dem Zapfen 50, der Unterlagscheibe 52, der Schraube 52 und der mittigen Bohrung 48 besteht, an der Hülse 36 leicht beweglich aufgehängt. Der Abstand a bleibt unverändert, solange nicht der Teller 30 mit einem Hindernis, wie beispielsweise einem Glasfaden der in Fig. 2 gezeigten Art, in Berührung kommt. Die unteren Stirnflächen der Näherungsschalter 34 sind mit der Unterseite der Bodenwand 44 bündig, so daß der Abstand a auch zwischen dem Teller 30 und den Näherungsschaltern 34 besteht. Diese bündige Einstellung der Näherungsschalter 34 läßt sich mittels der Klemmen 42 leicht herstellen. Die Hülse 36 mit dem Teller 30 wird so weit auf den Halter 32 geschoben, bis eine federvorbelastete Kugel 58 an dem Halter in eine entsprechende Öffnung 60 in der Hülse 36 einschnappt und so die Hülse an dem Halter lösbar arretiert. In dieser arretierten Stellung sind die unteren Stirnflächen der Näherungsschalter 34 mit der Unterseite der Bodenwand 44 bündig. Die Bohrungen 46 haben einen etwas größeren Durchmesser als die Näherungsschalter 34, so daß letztere das Aufschieben der Hülse 36 auf den Halter 32 nicht behindern.

Die Hülse 36 und der Teller 30 bilden einen Satz, der gegen einen anderen Satz ausgewechselt wird, wenn Hohlglasbehälter zu prüfen sind, deren Mündung 20 einen anderen Innendurchmesser hat. Der Durchmesser des Tellers jedes Satzes ist so gewählt, daß der Teller gerade durch die Mündung 20 paßt, damit ein möglichst großer Bereich des Behälterinneren durch den Teller erfaßbar ist. In Fig. 5 ist der durch den Teller nicht erfaßbare Bereich unterhalb der Mündung 20 eines Weithalsbehälters schraffiert angedeutet. Da Affenschaukeln normalerweise über den schraffierten Bereich hinaus in das Behälterinnere vorstehen, sind sie durch den Stempel 30 auch erfaßbar.

Die von der Stange 24 abgewandte Seite des Tellers 30 hat eine an die konvexe Wölbung des Bodens des zu prüfenden Hohlglasbehälters 14 angepaßte konkave Biegung, damit der oben erwähnte Abstand von 2 mm, den der Teller bei dem hier beschriebenen Ausführungsbeispiel in Bodennähe hat, zwischen Teller und Boden überall vorhanden ist. Der Teller 30 besteht ebenfalls aus leichtem Material, z.B. Kunststoff, und ist auf seiner von der Stange 24 abgewandten Seite mit einem harten Belag 56, zum Beispiel aus Federstahl, versehen, damit Bodenzapfen oder andere spitz zulaufende Fremdkörper den Teller nicht beschädigen können.

Die vorstehend beschriebene Vorrichtung zum Prüfen von Hohlglasbehältern arbeitet folgendermaßen:

Das Fühlerelement 22 wird auf oben beschriebene Weise vertikal in das Innere des Hohlglasbehälters 14 hineinbewegt. Wenn der Teller 30 dabei mit einem Hindernis wie dem oberen Glasfaden b in Fig. 2 in Berührung kommt, wird er nach oben zu der Hülse 36 hin abgelenkt und betätigt wenigstens einen der Näherungsschalter 34. Da die Stange 24 in dem hier beschriebenen Ausführungsbeispiel ihre Abwärtsbewegung fortsetzt, wird der genannte Glasfaden durch den Teller abgebrochen. Wenn der Teller bei seiner weiteren Abwärtsbewegung mit dem unteren Glasfaden s in Fig. 2 in Berührung kommt, wird wieder wenigstens einer der Näherungsschalter betätigt und auch dieser Glasfaden abgebrochen. Wenn wie erwähnt dem Prüfkarussell noch eine Wendevorrichtung nachgeschaltet ist, fallen später die abgebrochenen Glasfäden aus dem Hohlglasbehälter 14 heraus. Wenn sich kein Defekt in Form eines Hindernisses für den Teller 30 in dem Hohlglasbehälter 14 befindet, bewegt sich der Teller bis in die Hohe von 2 mm über dem Boden und dann wieder zurück, ohne daß einer der Näherungsschalter 34 betätigt worden ist. Dieser Hohlglasbehälter wird als gut betrachtet, wogegen jeder andere Hohlglasbehälter, in welchem wenigstens einer der Näherungsschalter zum Ansprechen gebracht worden ist, als Ausschuß betrachtet wird.

Wenn durch Annäherung des Tellers 30 an wenigstens einen der Näherungsschalter dieser betätigt wird, gibt er ein Signal über die Leitungen 38 an die Auswertelogik 40 ab. Diese gibt dann ein entsprechendes Signal an eine Auswurfeinrichtung 64 ab, damit diese betätigt wird, wenn der Hohlglasbehälter 14, der das Signal veranlaßt hat, an der Auswurfeinrichtung ankommt, die sich am Ausgang des Prüfkarussells 10 befinden kann, was in Fig. 1 nicht dargestellt ist. Die Auswertelogik 40 registriert auch anhand der von den Näherungsschaltern 34 gelieferten Signale, in welchem Bereich des Behälterinneren sich der Defekt befindet, der das Signal verursacht hat, um festzustellen, ob das Signal durch eine Affenschaukel an der Innenwand des Behälters oder durch einen Bodenzapfen ausgelöst worden ist. Eine mit ihr verbundene Signalanzeigeeinrichtung 62 zeigt dann an, von welcher Art der Defekt gewesen ist. Wenn Affenschaukeln als Defekte auftreten, kann deren Häufigkeit ausgewertet werden. Damit kann ermittelt werden, durch welche Form die Affenschaukeln erzeugt werden.

Die Prüfvorrichtung 12 könnte auch so gesteuert werden, daß das Fühlerelement sofort zurückbewegt wird, sobald der Teller 30 mit einem Hindernis in Berührung kommt. Das würde aber einen größeren Steuerungsaufwand mit sich bringen. Es ist deshalb einfacher, Defekte mit dem Fühlerelement zu zerstören und das Fühlerelement immer bis in die Nähe des Bodens des Hohlglasbehälters 14 zu bewegen. Wenn die Dicke des Bodens in vorliegendem Ausführungsbeispiel um mehr als 2 mm den üblichen Wert übersteigen sollte, wird das Fühlerelement selbstverständlich auf dem Boden aufsetzen, so daß der Teller alle drei Näherungsschalter 34 betätigt, und auch dieser Hohlglasbehälter als Ausschuß ausgeworfen wird. Der dickere Boden stellt zwar keinen "gefährlichen" Defekt dar, er deutet aber darauf hin, daß die betreffende Form möglicherweise nicht richtig arbeitet. Auch die dementsprechende Art von Signal wird durch die Signalanzeigeeinrichtung 62 angezeigt, so daß an der entsprechenden Form eingegriffen werden kann.

## Ansprüche

1. Vorrichtung zum Prüfen von Hohlglasbehältern auf Defekte, insbesondere in Form von Bodenzapfen oder Affenschaukeln, mit einem Fühlerelement und mit einer durch dieses betätigbaren Schalteinrichtung, wobei das Fühlerelement (22) an einer hin-und herbewegbaren Stange (24), mittels welcher es in das Behälterinnere bis in Bodennähe bewegbar ist, angebracht ist und auf der von der Stange (24) abgewandten Seite ein Druckstück (30) aufweist, das bei Berührung eines Hindernisses die Schalteinrichtung (34) betätigt, und wobei das Fühlerelement (22) einen an der Stange (24) befestigten Halter (32) daß das Druckstück ein leicht beweglich gelagerter Teller (30) ist und die Schalteinrichtung wenigstens einen an dem Halter (32) befestigen schalter (34) aufweist, **dadurch gekennzeichnet,** daß das Druckstück ein leicht beweglich gelagerter Teller (30) ist, däß auf dem Halter (32) eine Hülse (36) lösbar befestigt ist, an welcher der Teller (30) durch ein mittiges Gelenk (48, 50, 52, 54) leicht beweglich aufgehängt ist, und daß die Schalteinrichtung mehrere gleichabständig um die Längsachse des Halters (32) angeordnete und an dem Halter (32) einstellbar befestigte Näherungsschalter (34) aufweist.

2. Vorrichtung nach Ansprüche 1, dadurch gekennzeichnet, daß die von der Stange (24) abgewandte Seite des Tellers (30) eine an die konvexe Wölbung des Bodens des zu prüfenden Hohlglasbehälters (14) angepaßte konkave Biegung aufweist.

3. Vorrichtung nach Ansprüche 1 oder 2, dadurch gekennzeichnet, daß die Hülse (36) eine Bodenwand (44) mit einer mittigen Bohrung (48) aufweist, und daß das Gelenk (48, 50, 52, 54) einen mit Spiel durch die mittige Bohrung (48) hindurchgeführten Zapfen (50) des Tellers (30) aufweist, der sich mit einer Schulter (54) um die mittige Bohrung (48) abstützt und den Teller (30) im Abstand (a) von den Näherungsschalter (34) hält.

4. Vorrichtung nach einem der Ansprüche 1 bis 3, gekennzeichnet durch eine mit der Schalteinrichtung (34) verbundene Auswertelogik (40) die ihrerseits mit einer Auswurfeinrichtung (64) und einer Signalanzeigeeinrichtung (62) verbunden ist und anhand der von den Näherungsschaltern (34) gelieferten Signale registriert, in welchem Bereich des Behälterinneren sich der Defekt befindet, der das Signal verursacht hat.

## Claims

1. An apparatus for checking hollow glass containers for defects, particularly in the form of spikes or bird swings, having a sensor element and having a switching device which can be actuated by this, wherein the sensor element (22) is fitted to a rod (24) which can be moved backwards and forwards and by means of which it can be moved into the interior of the container to within the vicinity of the bottom, said sensor element comprising, at the side remote from the rod (24, a pressure member (30) which actuates the switching device (34) on touching an obstacle, and wherein the sensor element (22) comprises a holder (32) which is secured to the rod (24) and the switching device comprises at least one switch (34) secured to the holder (32), characterised in that the pressure member is a plate (30) mounted for easy movement, that detachably secured to the holder (32) is a sleeve (36) on which the plate (30) is suspended for easy movement by a central joint (48, 50, 52, 54), and that the switching device comprises a plurality of proximity switches (34) which are arranged with equal spacing round the longitudinal axis of the holder (32) and are adjustably secured to the holder (32).

2. An apparatus according to Claim 1, characterised in that the side of the plate (30) remote from the rod (24) has a concave curvature matching the convex arching of the bottom of the hollow glass container (14) to be checked.

3. An apparatus according to Claim 1 or 2, characterised in that the sleeve (36) comprises a bottom wall (44) with a central bore (48) and that the joint (48, 50, 52, 54) comprises a stud (50) of the plate (30), which stud is taken through the central bore (48) with clearance, is supported by a shoulder (54) round the central bore (48) and holds the plate (30) at the distance (a) from the proximity switches (34).

4. An apparatus according to any one of Claims 1 to 3, characterised by an evaluation logic (40) which is connected to the switching device (34) and which in turn is connected to an ejection device (64) and a signal indicating device (62) and records, with reference to the signals delivered by the proximity switches (34), in which region of the interior of the container the defect which has caused the signal is situated.

## Revendications

1. Dispositif pour contrôler les défauts de récipients en verre creux, notamment sous forme de protubérances du fond ou de ponts de verre, comprenant un élément palpeur et un dispositif de commutation actionné par ce dernier, l'élément palpeur (22) étant disposé sur une tire (24) mobile en va-et-vient qui permet de le déplacer, à l'intérieur du récipient, jusqu'à proximité du fond, et présentant sur son côté opposé à la tire (24) une pièce de pression (30) qui actionne le dispositif de commutation (34) lorsqu' elle touche un obstacle, et l'élément palpeur (22) présentant un support (32) fixé à la tige (24), tandis que le dispositif de commutation présente au moins un commutateur (34) fixé sur le support (32), caractérisé en ce que la pièce de pression est un disque (30) monté librement, en ce qu'un manchon (36) est fixé de manière amovible sur le support (32), manchon auquel le disque (30) est librement suspendu par un assemblage articulé central (48, 50, 52, 54), et en ce que le dispositif de commutation présente plusieurs commutateurs de proximité (34) disposés à même distance autour de l'axe longitudinal du support (32) et fixés de manière réglable sur le support (32).

2. Dispositif selon la revendication 1, caractérisé en ce que le côté du disque (30) qui est opposé à la tige (24) présente une courbure concave adaptée à la courbure convexe du fond du récipient en verre creux (14) à contrôler.

3. Dispositif selon la revendication 1 ou 2, caractérisé en ce que le manchon (36) présente une paroi de fond (44) pourvue d'un perçage central (48) et en ce que l'assemblage articulé (48, 50, 52, 54) comprend un pivot (50) du disque (30) qui traverse avec jeu le perçage central (48), qui s'appuie par un épaulement (54) autour du perçage central (48) et qui maintient le disque (30) à distance (a) des commutateurs de proximité (34).

4. Dispositif selon l'une des revendications 1 à 3, caractérisé par une unité logique d'analyse (40), reliée au dispositif de commutation (34), qui est elle-même reliée à un dispositif d'évacuation (64) et à un dispositif d'affichage de signaux (62) et qui, à l'aide des signaux fournis par les commutateurs de proximité (34), enregistre dans quelle région de l'intérieur du récipient se trouve le défaut qui a donné lieu au signal.

**Fig.1**

**Fig.2**

**Fig.3**

**Fig. 4**

**38**

**58**　**32**

**34**

**42**

**60**

**46**　**36**

**44**

**30**

**52**

**56**　**50**　**54**　**48**

**a**

**Fig. 5**　**38**　**40**　**62**

AUSWERTE-
LOGIK

SIGNAL-
ANZEIGE-
EINRICHTUNG

**22**

**14**　**30**

**64**

AUSWURF-
EINRICHTUNG